# EUROPEAN PATENT SPECIFICATION

(11) **EP 0 986 149 B1**
(45) Date of publication and mention of the grant of the patent: **14.05.2003**
(21) Application number: 99307081.2
(22) Date of filing: 07.09.1999
(51) Int. Cl.: H01S 3/067, H04B 10/17

(54) **Optical amplifier**
Optischer Verstärker
Amplificateur optique

(30) Priority: 07.09.1998 JP 25266098
(43) Date of publication of application: 15.03.2000
(73) Proprietor: NEC Corporation, Minato-ku, Tokyo 108-8001 (JP)
(72) Inventor: Michishita, Yukio, Tokyo 108-01 (JP)
(74) Representative: Abnett, Richard Charles

(56) References cited:
- PATENT ABSTRACTS OF JAPAN vol. 1997, no. 10, 31 October 1997 (1997-10-31) -& JP 09 159526 A (FUJITSU LTD), 20 June 1997 (1997-06-20)
- SEO YEON PARK ET AL: "DYNAMIC GAIN AND OUTPUT POWER CONTROL IN A GAIN-FLATTENED ERBIUM-DOPED FIBER AMPLIFIER" IEEE PHOTONICS TECHNOLOGY LETTERS, IEEE INC. NEW YORK, US, vol. 10, no. 6, 1 June 1998 (1998-06-01), pages 787-789, XP000755468 ISSN: 1041-1135
- KIM H S ET AL: "ALL-FIBER ACOUSTO-OPTIC TUNABLE NOTCH FILTER WITH ELECTRONICALLY CONTROLLABLE SPECTRAL PROFILE" OPTICS LETTERS, OPTICAL SOCIETY OF AMERICA, WASHINGTON, US, vol. 22, no. 19, 1 October 1997 (1997-10-01), pages 1476-1478, XP000723626 ISSN: 0146-9592

## Description

The present invention relates to an optical amplifier, especially to an optical amplifier that is used in a multistage relay for a wavelength division multiplexing transmission system.

Wavelength division multiplexing transmission (WDM transmission), which is a technology of high capacity communication, is now starting to be put to practical use. However, in this WDM transmission system, since any gain difference in each wavelength constituting a transmission wave becomes a big issue when a multistage relay is constructed with the optical amplifier, a low gain tilt is required.

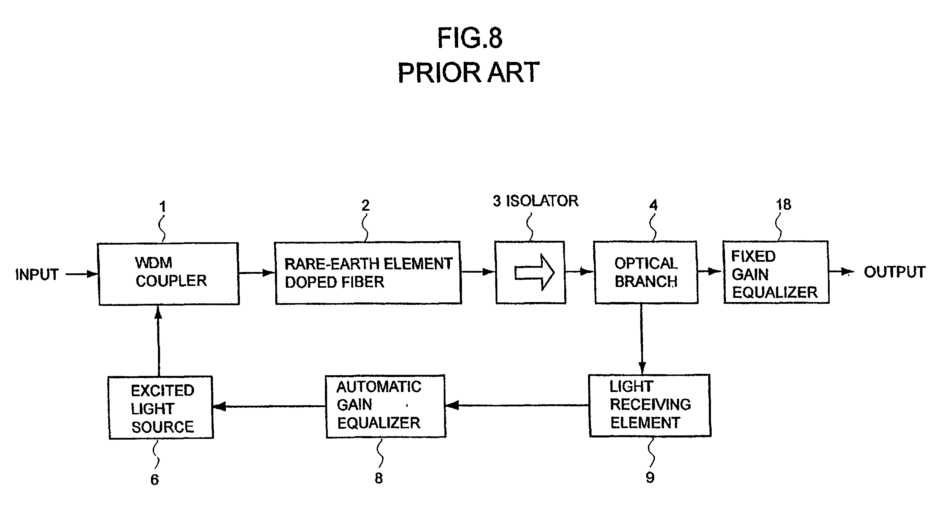

In known gain equalization methods, either an optimum design has been calculated for each transmission system, or, like an optical amplifier used as an optical relay shown in Fig. 8, a fixed gain equalizer has been used.

In the optical relay of Fig. 8, a wavelength synthesizing coupler 1 synthesizes excited light generated by an excited light source 6 and an input optical signal. A rare-earth element doped fiber 2 that has received the synthesized light optically amplifies the input signal by means of excited light in the synthesized light, and an isolator 3 prevents oscillation associated with the optical amplification. One output from an optical branch 4 that has received an output from the isolator 3 is converted into a current by a light receiving element 9, and an automatic gain control circuit 8 controls the output level of the excited light source 6 so as to make the output from an apparatus constant based on this current information. Other outputs from the optical branch 4 are input to an fixed gain equalizer 18 where the gain difference of each wavelength is equalized and which provide the output.

Also, as a method of obtaining optimum gain equalization in the transmission system, there is a disclosure JP-A-223136/1996, "Gain Equalization Method in Optical Amplification Relay Technique" by Mr. Fukutoku, et al., and as a method of improving a gain difference by wavelengths of an optical amplifier, there is a disclosure JP-A-43647/1997, "Gain Equalizer and Optical Amplifier" by Mr. Domon.

With regard to the above-mentioned gain equalization method, in the method in which the optimum design for every transmission system is calculated, a difference between the design and actual fact is a matter of concern, and the method is not general. Also, in the method in which the fixed gain equalizer is used, there is a defect that a gain difference in each wavelength occurs by means of dependence on wavelength of the gain of the optical amplifier due to temperature or by means of dependence on wavelength of the gain of the optical amplifier based on the change of the input level, due to lack and so forth of an input signal during wavelength division multiplexing transmission. Furthermore, the method in JP-A-223136/1996 does not provide an effect by applying it to the individual relays, and also, since the method in JP-A-43647/1997 is for realizing gain equalization by mechanically bending a fiber, changes due to temperature characteristic and reliability are a matter of concern.

The documents JP-A-9-159526 and the article by S.Y Park et al. "Dynamic Gain and Output Power Control in a Gain-Flattened Erbium-Doped Fiber Amplifier", IEEE Phot. Technol. Lett., 10(6), June 1998, p. 787-789, disclose optical amplifiers which comprise variable attenuators and means for controlling the pump power in order to achieve gain equalization.

### SUMMARY OF THE INVENTION

The invention in its various aspects is defined in the independent claims below to which reference should now be made. Advantageous features are set forth in the appendant claims.

A preferred embodiment of the invention is described in more detail below with reference to the drawings. In this preferred embodiment, a rare-earth element doped fiber amplifies input light by means of excited light issued by an excited light source. A part of the amplified light divided by a branch is converted into a current at a light receiving element, and an automatic gain control circuit controls the excited light source. An excited light receiving element receives excited light and converts it into a current, and based on the current information, a variable gain equalizer control circuit controls a variable gain equalizer and outputs amplified light having characteristic that the gain difference between different wavelengths is reduced.

The variable gain equalizer may be either at the output or at the input of the optical amplifier, and there may be more than one variable gain equalizer. In the latter case, one or more equalizers may be at the input and one or more at the output.

### BRIEF DESCRIPTION OF THE DRAWINGS

The present invention will now be described in detail by way of example with reference to the drawings, in which:
Fig. 1 is an arrangement view of a first embodiment of an optical amplifier of the present invention,
Fig. 2 is one embodiment of the variable gain equalizer control circuit 10 of Fig. 1,
Fig. 3 is a view for explaining operation of the optical amplifier of Fig. 2,
Fig. 4 is an arrangement view of a second embodiment of the optical amplifier of the present invention,
Fig. 5 is an arrangement view of a third embodiment of the optical amplifier of the present invention,
Fig. 6 is an arrangement view of a fourth embodiment of the optical amplifier of the present invention,
Fig. 7 is an arrangement view of a fifth embodiment of the optical amplifier of the present invention and
Fig. 8 is an arrangement view of a conventional example of an optical amplifier.

### DESCRIPTION OF THE EMBODIMENTS

Next, embodiments of the present invention will be explained by referring to drawings.

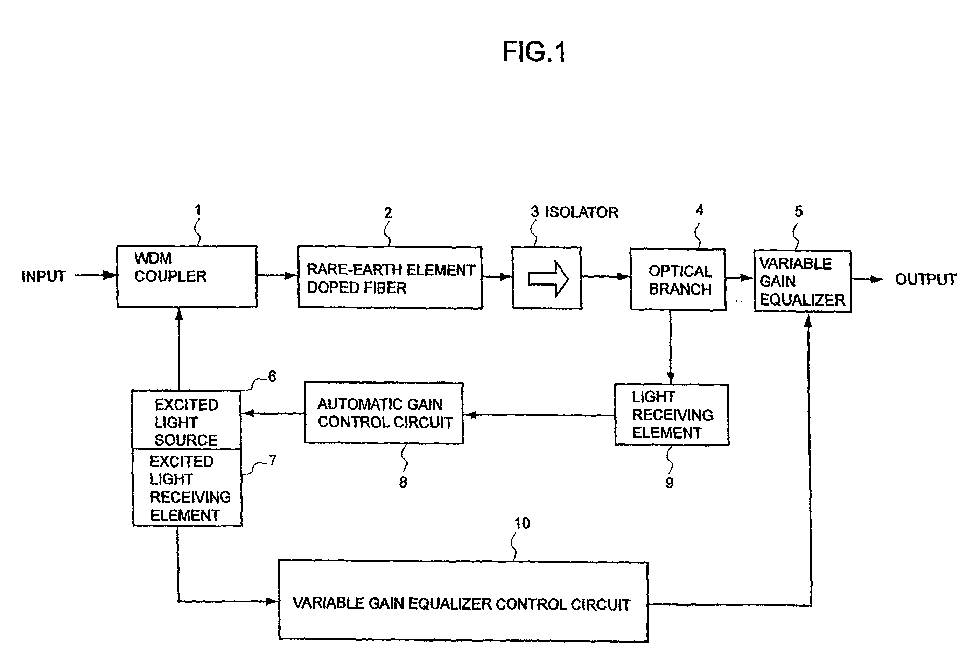

Fig. 1 is an arrangement view of a first embodiment of an optical amplifier of the present invention.

In this optical amplifier, a variable gain equalizer 5 is used instead of the fixed gain equalizer 16 of the optical amplifier of Fig. 8, and an excited light receiving element 7 and a variable gain equalizer control circuit 10 are added. The variable gain equalizer 5 is controlled by a control current having a radio frequency, and an acoustic wave optical element is used, in which a loss peak wavelength of light is changed by a frequency of the control current, and a quantity of light is changed by an amplitude of the control current (Publication: "Single-mode-fiber acousto-optic tunable notch filter with variable spectral profile" Hyo Sang Kim, et al.: 1997, Proceedings of Conference on Optical Fiber Communication). The excited light receiving element 7 converts excited light generated by the excited light source 6 into a current. The variable gain equalizer control circuit 10 receives the current generated by the excited light receiving element 7, and based on the current information, generates a control current having a radio frequency, and controls the variable gain equalizer 5 based on information of a frequency and an amplitude which the generated control current has, and reduces a gain difference between the respective wavelengths of light amplified by a rare-earth element doped fiber 2, and outputs it.

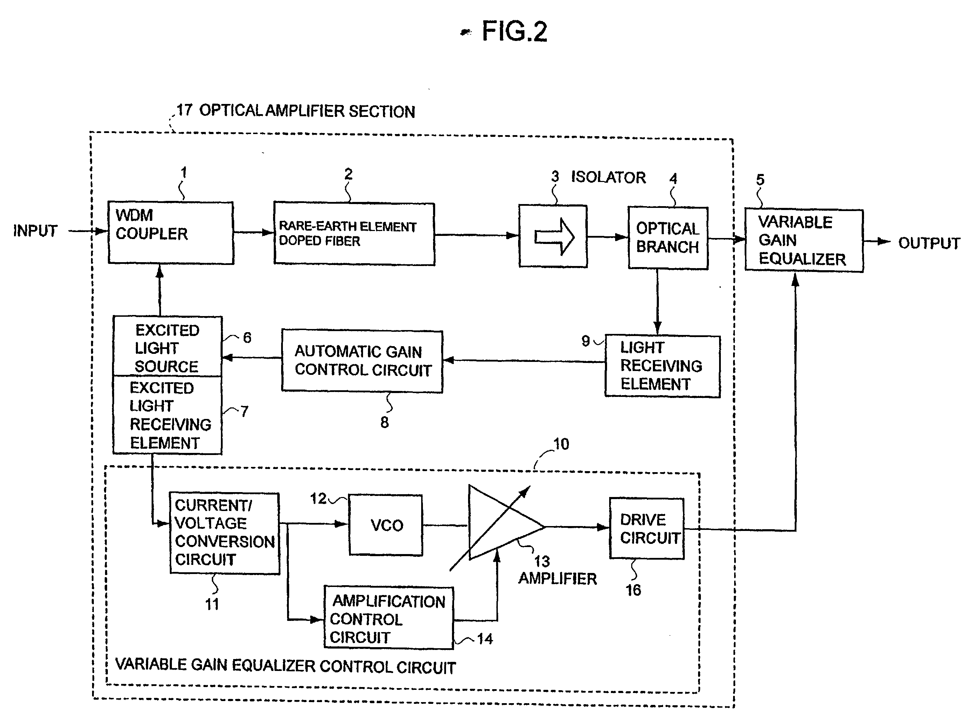

Fig. 2 shows one embodiment of the variable gain equalizer control circuit 10 of Fig. 1.

In this optical amplifier, the variable gain equalizer control circuit 10 is consisted of a current/voltage conversion circuit 11, a Voltage Controlled Oscillator (referred to as VCO, hereinafter) 12, an amplifier 13, an amplification control circuit 14, and a drive circuit 16.

The current/voltage conversion circuit 11 converts a value of a current generated by the excited light receiving element 7 into a voltage, and outputs it. The VCO 12 generates an alternating current having a radio frequency proportional to a voltage level generated by the current/voltage conversion circuit 11. The amplifier 13 amplifies the alternating current generated by the VCO 12. The amplification control circuit 14 controls a quantity of amplification of the amplifier 13 so as to comply with an input range of the drive circuit 16. The drive circuit 16 drives the variable gain equalizer 5 using a radio frequency current output by the amplifier 13 as a control current.

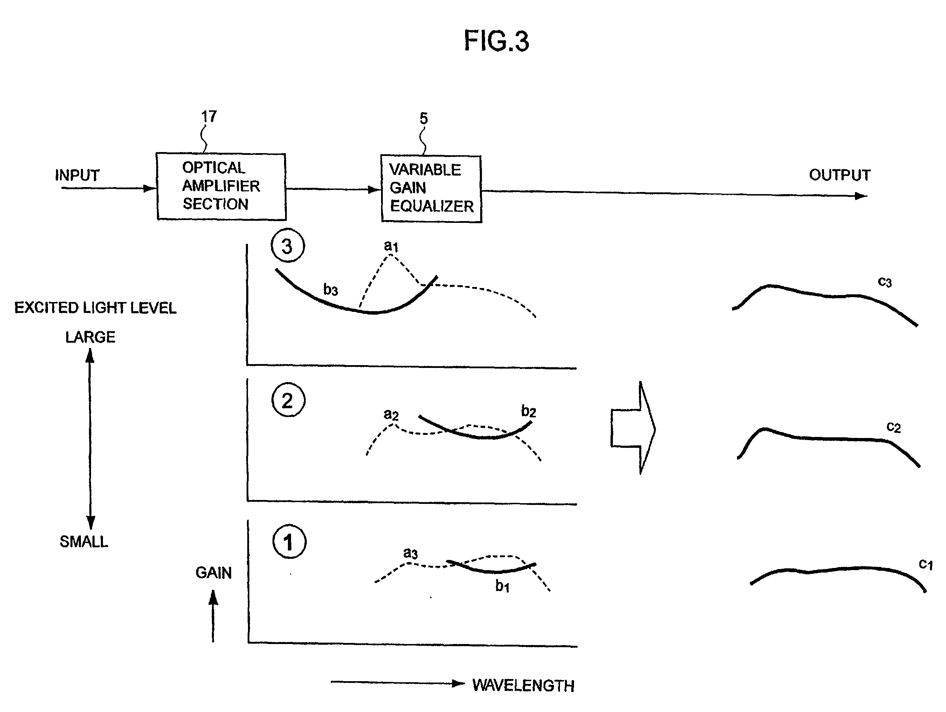

Next, operation of this optical amplifier will be explained by referring to Fig. 2 and Fig. 3.

An optical input signal input to the optical amplifier is optically amplified by the rare-earth element doped fiber 2 that is being excited by the excited light source 6. At this time, an optical output is divided at the optical branch 4, and in order to keep an optical output level constant by means of current information output from the light receiving element 9, an output level of the excited light source 6 is controlled by the automatic gain control circuit 8. Here, an isolator 3 acts for preventing oscillation in the rare-earth element doped fiber 2. This optical amplifier has characteristic that a gain has dependence on a wavelength in an optical amplifier section 17 in which a variable gain equalizer is not included, as shown by broken lines a₁, a₂ and a₃ of Fig. 3 ① to ③ for levels (Pumping power) of excited light generated by the excited light source 6. In this case, if a level of the excited light is small, the optical amplifier shows condition of the broken line ①, and in accordance with enhancement of the level of the excited light, a wavelength at which a gain has a peak moves to a short wavelength in order of ② → ③. For example, in case that an input level of the optical amplifier lowers, the automatic gain control circuit 8 acts *so* as to keep the output level of the light constant, and an excited light level of the excited light source 6 increases, and thereby, light that is input to the excited light receiving element 7 for converting an output level of the excited light source 6 into a current becomes to be large, and since a larger current occurs, a large voltage is generated by the current/voltage conversion circuit 11, and it is sensed that the excited light level has become to be large.

Since the variable gain equalizer 5 has characteristic that a wavelength at which a loss peak of light appears changes in accordance with a frequency of a control current and a quantity of loss of the light also changes in accordance with an amplitude of the control current, as shown by solid lines b₁, b₂ and b₃ in a graph of Fig. 3, the loss of a gain of the variable gain equalizer 5 is large as a level of the excited light becomes to be large, and by defining a frequency of a current generated by the VCO 12 so as to move a peak of the loss toward a short wavelength side, and controlling the amplifier 13 for amplifying an amplitude of the current by the amplification control circuit 14, output characteristic in which a gain difference between the respective wavelengths is obtained at an output terminal of the optical amplifier like solid lines c₁, c₂ and c₃ shown on a right-hand side of Fig. 3.

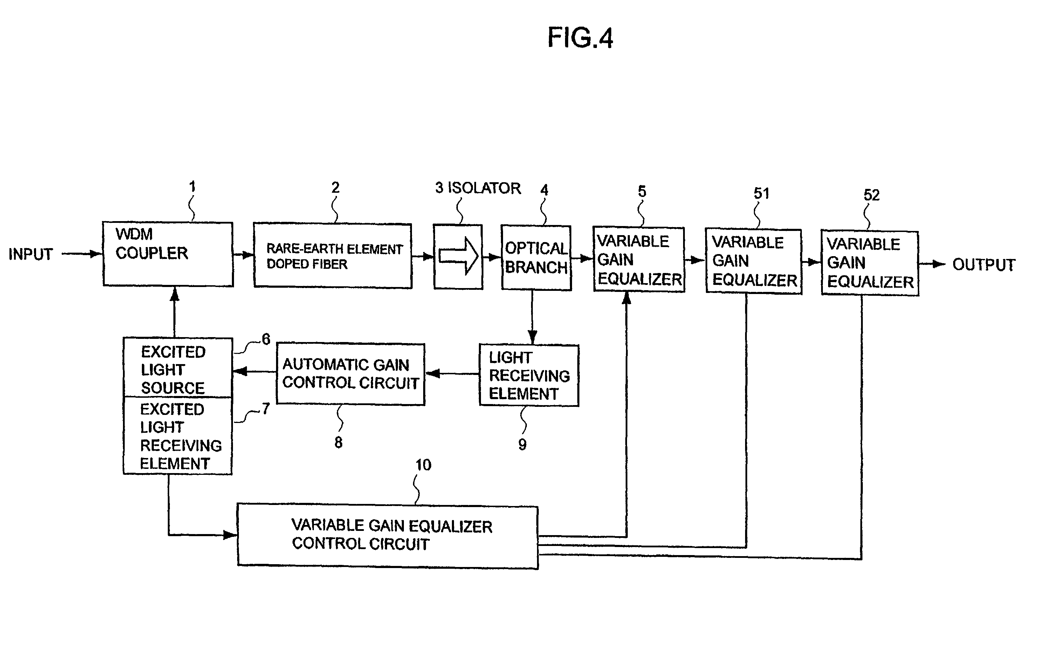

Fig. 4 is an arrangement view of a second embodiment of the optical amplifier of the present invention.

In this optical amplifier, variable gain equalizers 51 and 52 are inserted in series in the back of the variable gain equalizer 5 of the optical amplifier of Fig. 1, and the variable gain equalizers 51 and 52 are subject to the control by the variable gain equalizer control circuit 10, respectively, and further reduces a gain difference between the respective wavelengths of an input and amplified light and outputs it.

In the optical amplifier of the second embodiment, although the three-stage variable gain equalizers are inserted in series, generally n variable gain equalizers can be used in series.

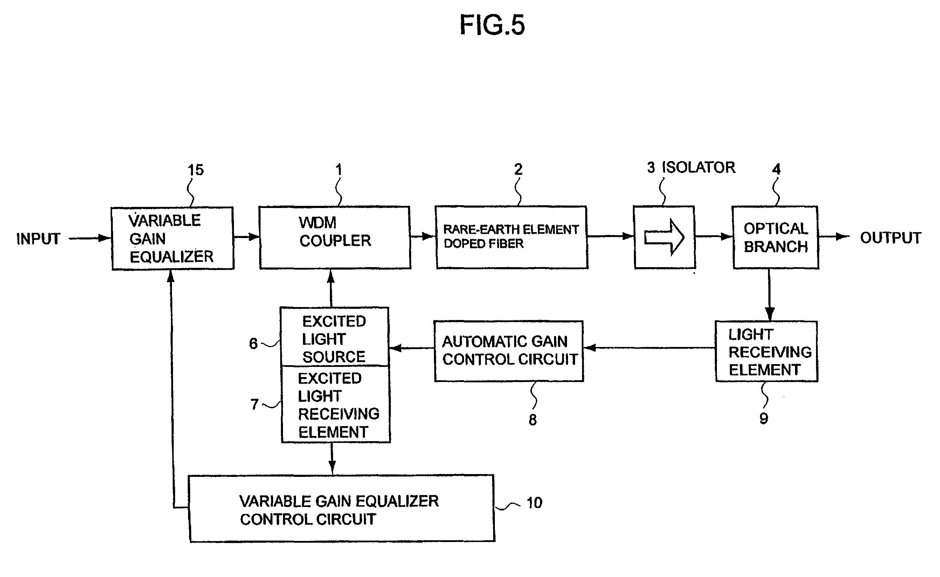

Fig. 5 is an arrangement view of a third embodiment of the optical amplifier of the present invention.

This optical amplifier has an arrangement same as that of the optical amplifier of Fig. 1, except that a variable gain equalizer 15 inserted in the front of a wavelength synthesizing coupler instead of the variable gain equalizer 5 of Fig. 1. Since the variable gain equalizer 15 is subject to the control by the variable gain equalizer control circuit 10 and functions so as to reduce a gain difference between the respective wavelengths of input light, the optical amplifier outputs amplified light in which the gain difference between the respective wavelengths is reduced.

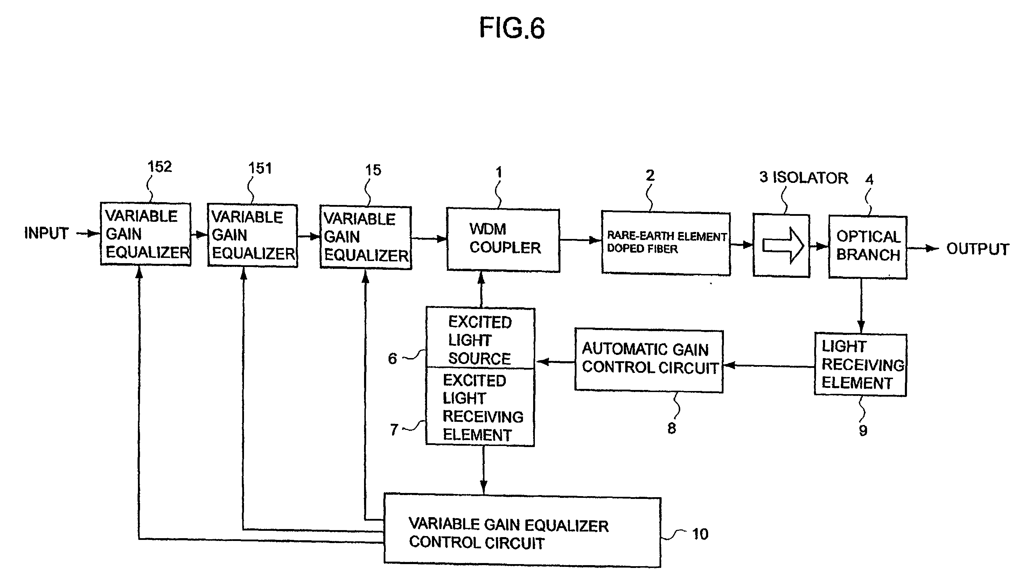

Fig. 6 is an arrangement view of a fourth embodiment of the optical amplifier of the present invention.

In this optical amplifier, variable gain equalizers 151 and 152 are inserted in series in the front of the variable gain equalizer 15 of the optical amplifier of Fig. 5, and since the variable gain equalizers 151 and 152 are subject to the control by the variable gain equalizer control circuit 10 and functions so as to further reduce a gain difference between the respective wavelengths of input light, output light from the optical amplifier has characteristic that the gain difference between the respective wavelengths is further reduced.

In the optical amplifier of the fourth embodiment, although the three-stage variable gain equalizers are inserted in series, generally n variable gain equalizers can be used in series.

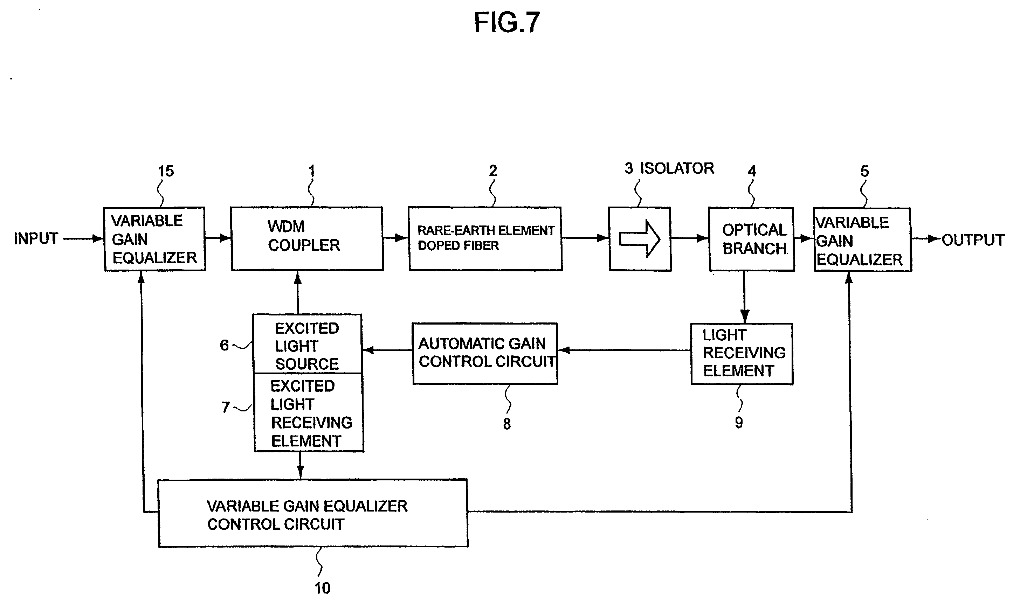

Fig. 7 is an arrangement view of a fifth embodiment of the optical amplifier of the present invention.

In this optical amplifier, a variable gain equalizer 15 same as that in Fig. 5 is inserted in the front of the wavelength synthesizing coupler 1 of Fig. 1, and the variable gain equalizer 15, together with the variable gain equalizer 5, is controlled by the variable gain equalizer control circuit 10.

In this embodiment, the variable gain equalizers are adopted on an input side and an output side of the optical amplifier, and reduction of the gain difference between the respective wavelengths is effectively realized.

In the optical amplifier of this embodiment, although one variable gain equalizer is used on each of the input side and the output side, it is possible to adopt an arrangement in which n variable gain equalizers are arranged, respectively, on the input side and the output side of the optical amplifier like in the second and third embodiments.

As explained above, since, by providing one or more than one variable gain equalizers and variable gain equalizer control means for controlling the variable gain equalizers in the present invention, it is possible to obtain output light having characteristic in which, even though a level of input light changes, a gain difference between respective wavelengths is reduced, the present invention effects an advantage that the optical amplifier applicable to a multistage relay of a WDM transmission system.

## Claims

1. An optical amplifier comprising:
an excitation light source (6) for generating excitation light;
a wavelength synthesizing coupler (1) for synthesizing an input optical signal and excitation light generated by said excitation light source and outputting it;
a rare-earth doped fiber (2) for receiving an output from said wavelength synthesizing coupler, and amplifying an input optical signal in said output, which is excited by excitation light in said output;
an optical branch (4) for receiving said amplified input optical signal which is output from said fiber, and dividing it into outputs and outputting them;
a first light receiving element (9) for receiving a first output light from said optical branch, and converting it into a current;
an automatic gain control circuit (8) for controlling an output level of said excitation light source so as to make a level of a second output light from said optical branch constant, based on current information output from the first light receiving element;
a second light receiving element (7) for receiving excitation light output from said excited light source, and converting it into a current;
one or more than one variable gain equalizers (5) for equalizing a gain difference of each wavelength of input light, and outputting it; and
variable gain equalization control means (10) for controlling said variable gain equalizers based on current information output from the second light receiving element so that a gain difference in each wavelength of light which is output from said variable gain equalizers becomes to be constant.

2. An optical amplifier according to claim 1, wherein said variable gain equalization control means comprises:
a current/voltage conversion circuit (11) for receiving a current generated by said second light receiving element, and converting it into a voltage;
a voltage control frequency generator (12) for generating an alternating current having a frequency proportional to a level of a voltage generated by said current/voltage conversion circuit;
an amplifier (13) for amplifying an amplitude of the alternating current generated by said voltage control frequency generator;
a control circuit (14) for controlling said amplifier so that an amplitude of the alternating current output by said amplifier becomes to be a required value; and
a drive circuit (16) for receiving an alternating current output by said amplifier, and driving said variable gain equalizers.

3. An optical amplifier according to claim 1 or 2, wherein said wavelength synthesizing coupler (1), said rare-earth doped fiber (2), and said optical branch (4) form a series circuit, and wherein said variable gain equalizer (5; 15) is in series with said series circuit.

4. An optical amplifier according to claim 1, 2 or 3, wherein said one or more than one variable gain equalizers (5; 5,51,52) are inserted after said optical branch (4).

5. An optical amplifier according to claim 1, 2 or 3, wherein said one or more than one variable gain equalizers (15; 15,151,152) are inserted before said wavelength synthesizing coupler (1).

6. An optical amplifier according to claim 1, 2 or 3, wherein variable gain equalizers (5,15) are inserted one or more after said optical branch (4) and one or more before said wavelength synthesizing coupler (1).

7. An optical amplifier according to any of claims 1 to 6, wherein said one or more than one variable gain equalizers (5; 15) are controlled by said variable gain equalization control means.

8. An optical amplifier according to any of claims 1 to 7, further comprising an isolator (3) connected to said rare-earth doped fiber (2) for preventing oscillation associated with optical amplification of said fiber.

## Patentansprüche

1. Optischer Verstärker, der aufweist:
eine Anregungslichtquelle (6) zur Erzeugung von Anregungslicht;
einen Wellenlängensynthesekoppler (1) zum Synthetisieren eines optischen Eingangssignals und von der Anregungslichtquelle erzeugtem Anregungslicht und zum Ausgeben davon;
eine mit Seltenen Erden dotierte Faser (2) zum Empfangen einer Ausgabe von dem Wellenlängensynthesekoppler und zum Verstärken eines optischen Eingangssignals in der genannten Ausgabe, das durch Anregungslicht in der Ausgabe angeregt wird;
eine optischen Verzweigung (4) zum Empfangen des verstärkten optischen Eingangssignals, das von der Faser ausgegeben wird, und zu dessen Teilung in Ausgaben und zu deren Ausgabe;
ein erstes Lichtempfangselement (9) zum Empfangen eines ersten Ausgabelichts von der optischen Verzweigung und zu dessen Umwandlung in einen Strom;
eine automatische Verstärkungssteuerungsschaltung (8) zum Steuern eines Ausgangspegels der Anregungslichtquelle, um auf der Basis von Strominformation, die von dem ersten Lichtempfangselement ausgegeben wird, den Pegel eines zweiten Ausgabelichts von der optischen Verzweigung konstant zu machen;
ein zweites Lichtempfangselement (7) zum Empfangen von Anregungslicht, das von der Anregungslichtquelle ausgegeben wird, und zu dessen Umwandlung in einen Strom;
einen oder mehr als einen variablen Verstärkungsentzerrer (5), um eine Verstärkungsdifferenz für jede Wellenlänge von Eingangslicht zu entzerren und es auszugeben; und
eine Steuerungseinrichtung (10) für variable Verstärkungsentzerrer zum Steuern der variablen Verstärkungsentzerrer auf der Basis von Strominformation, die von dem zweiten Lichtempfangselement ausgegeben wird, so daß eine Verstärkungsdifferenz in jeder Wellenlänge von Licht, das von den variablen Verstärkungsentzerrern ausgegeben wird, konstant wird.

2. Optischer Verstärker nach Anspruch 1, wobei die Steuerungseinrichtung für variable Verstärkungsentzerrer aufweist:
eine Strom-/Spannungswandlerschaltung (11) zum Empfangen eines von dem zweiten Lichtempfangselement erzeugten Stroms und dessen Umwandlung in eine Spannung;
einen Spannungssteuerungs-Frequenzgenerator (12) zum Erzeugen eines Wechselstroms mit einer Frequenz, die proportional zu einem Pegel der von der Strom-/Spannungswandlerschaltung erzeugten Spannung ist;
einen Verstärker (13) zum Verstärken der Amplitude des von dem Spannungssteuerungs-Frequenzgenerator erzeugten Wechselstroms;
eine Steuerschaltung (14) zum Steuern des Verstärkers derart, daß die Amplitude des von dem Verstärker ausgegebenen Wechselstroms einen erforderlichen Wert annimmt; und
eine Treiberschaltung (16) zum Empfangen eines von dem Verstärker ausgegebenen Wechselstroms und Treiben der variablen Verstärkungsentzerrer.

3. Optischer Verstärker nach Anspruch 1 oder 2, wobei der Wellenlängensynthesekoppler (1), die mit Seltenen Erden dotierte Faser (2) und die optische Verzweigung (4) eine Reihenschaltung bilden und wobei der variable Verstärkungsentzerrer (5; 15) in Reihe zu dieser Reihenschaltung ist.

4. Optischer Verstärker nach Anspruch 1, 2 oder 3, wobei der eine oder mehr als ein variabler Verstärkungsentzerrer (5; 5, 51, 52) nach der optischen Verzweigung (4) eingefügt sind.

5. Optischer Verstärker nach Anspruch 1, 2 oder 3, wobei der eine oder mehr als ein variabler Verstärkungsentzerrer (15; 15, 151, 152) vor dem Wellenlängensynthesekoppler (1) eingefügt sind.

6. Optischer Verstärker nach Anspruch 1, 2 oder 3, wobei ein oder mehr als ein variabler Verstärkungsentzerrer (5, 15) nach der optischen Verzweigung (4) und einer oder mehrere vor dem Wellenlängensynthesekoppler (1) eingefügt sind.

7. Optischer Verstärker nach einem der Ansprüche 1 bis 6, wobei der eine oder mehr als ein variabler Verstärkungsentzerrer (5, 15) durch die Steuerungseinrichtung für variable Verstärkungsentzerrer gesteuert werden.

8. Optischer Verstärker nach einem der Ansprüche 1 bis 7, der ferner einen Isolator (3) aufweist, der mit der mit Seltenen Erden dotierten Faser (2) verbunden ist, um eine mit der optischen Verstärkung der Faser zusammenhängende Oszillation zu verhindern.

## Revendications

1. Amplificateur optique comprenant :
une source de lumière d'excitation (6) pour générer une lumière d'excitation ;
un coupleur synthétiseur de longueurs d'ondes (1) pour synthétiser un signal optique d'entrée et une lumière d'excitation générée par ladite source de lumière d'excitation et pour le fournir en sortie ;
une fibre dopée aux terres rares (2) pour recevoir une sortie provenant dudit coupleur synthétiseur de longueurs d'ondes, et pour amplifier un signal optique d'entrée dans ladite sortie, qui est excité par la lumière d'excitation dans ladite sortie ;
un embranchement optique (4) pour recevoir ledit signal optique d'entrée amplifié qui est fourni en sortie par ladite fibre, et pour le diviser en sorties et les fournir en sortie ;
un premier élément de réception de lumière (9) pour recevoir une première lumière de sortie provenant dudit embranchement optique et la convertir en un courant ;
un circuit de commande de gain automatique (8) pour commander un niveau de sortie de ladite source de lumière d'excitation de façon à rendre constant un niveau d'une seconde lumière de sortie provenant dudit embranchement optique, en se basant sur des informations de courant fournies en sortie par le premier élément de réception de lumière ;
un second élément de réception de lumière (7) pour recevoir une lumière d'excitation fournie en sortie par ladite source de lumière excitée et la convertir en un courant ;
un ou plusieurs égaliseurs de gain variable (5) pour égaliser une différence de gain de chaque longueur d'onde de lumière d'entrée et la fournir en sortie ; et
des moyens de commande d'égalisation de gain variable (10) pour commander lesdits égaliseurs de gain variable en se basant sur des informations de courant fournies en sortie par le second élément de réception de lumière de telle sorte qu'une différence de gain dans chaque longueur d'onde de lumière qui est fournie en sortie par lesdits égaliseurs de gain variable devienne constante.

2. Amplificateur optique selon la revendication 1, dans lequel lesdits moyens de commande d'égalisation de gain variable comprennent :
un circuit de conversion courant/tension (11) pour recevoir un courant généré par ledit second élément de réception de lumière et le convertir en une tension ;
un générateur de fréquence de commande de tension (12) pour générer un courant alternatif ayant une fréquence proportionnelle au niveau d'une tension générée par ledit circuit de conversion courant/tension ;
un amplificateur (13) pour amplifier une amplitude du courant alternatif généré par ledit générateur de fréquence de commande de tension ;
un circuit de commande (14) pour commander ledit amplificateur de telle sorte qu'une amplitude du courant alternatif fourni en sortie par ledit amplificateur devienne une valeur requise ; et
un circuit de pilotage (16) pour recevoir un courant alternatif fourni en sortie par ledit amplificateur et piloter lesdits égaliseurs de gain variable.

3. Amplificateur optique selon la revendication 1 ou 2, dans lequel ledit coupleur synthétiseur de longueurs d'ondes (1), ladite fibre dopée aux terres rares (2) et ledit embranchement optique (4) forment un circuit série et dans lequel ledit égaliseur de gain variable (5 ; 15) est en série avec ledit circuit série.

4. Amplificateur optique selon la revendication 1, 2 ou 3, dans lequel lesdits un ou plusieurs égaliseurs de gain variable (5 ; 5, 51, 52) sont insérés après ledit embranchement optique (4).

5. Amplificateur optique selon la revendication 1, 2 ou 3, dans lequel lesdits un ou plusieurs égaliseurs de gain variable (15 ; 15, 151, 152) sont insérés avant ledit coupleur synthétiseur de longueurs d'ondes (1).

6. Amplificateur optique selon la revendication 1, 2 ou 3, dans lequel on insère des égaliseurs de gain variable (5, 15), un ou plusieurs après ledit embranchement optique (4) et un ou plusieurs avant ledit coupleur synthétiseur de longueurs d'ondes (1).

7. Amplificateur optique selon l'une quelconque des revendications 1 à 6, dans lequel lesdits un ou plusieurs égaliseurs de gain variable (5 ; 15) sont commandés par lesdits moyens de commande d'égalisation de gain variable.

8. Amplificateur optique selon l'une quelconque des revendications 1 à 7, comprenant en outre un isolateur (3) connecté à ladite fibre dopée aux terres rares (2) pour empêcher une oscillation associée à l'amplification optique de ladite fibre.
